# EUROPEAN PATENT APPLICATION

(11) **EP 4 703 426 A1**
(43) Date of publication of application: **04.03.2026**
(21) Application number: 24196738.9
(22) Date of filing: 27.08.2024
(51) Int. Cl.: C08L 23/0807, C08F 210/16, C08F 2/34

(54) **METHOD FOR CONTROLLING POLYMER MATERIAL FORMATION**

(71) Applicant: Borealis GmbH, 1020 Vienna (AT)
(72) Inventor: HOFF, Matthias, 4021 Linz (AT); KETTNER, Joana, 4021 Linz (AT); KANELLOPOULOS, Vasileios, 4021 Linz (AT); POLLHAMMER, Stefan, 4021 Linz (AT)
(74) Representative: Kador & Partner Part mbB

(57) **Abstract**

The present invention is concerned with a process for polymerizing an alpha-olefin polymer or copolymer in a gas phase reactor and an alpha-olefin polymer or copolymer obtained according to said process. The process is based on the control of the amorphous phase density of the growing polymer particles.

## Description

The present invention is concerned with a process for polymerizing an alpha-olefin polymer or copolymer in a gas phase reactor and an alpha-olefin polymer or copolymer obtained according to said process.

### Background

Alpha-olefin polymers or copolymers (hereinafter, unless otherwise indicated, referred to for simplicity as polymers) are typically produced in a low-pressure reactor, utilizing, for example, solution, slurry, or gas phase polymerization processes. Polymerization takes place in the presence of catalyst systems such as those employing, for example, a Ziegler-Natta catalyst, a chromium-based catalyst, a metallocene catalyst, or combinations thereof. To reduce or to avoid certain trade-off among desirable attributes, bimodal or multimodal polymers, i.e., polymers with a broad composition distribution of short chain branches among the molecules that form the polymer, have become increasingly important in the polyolefins industry, with a variety of manufacturers offering products of this type. Whereas older technology relied on one- or two-reactor systems to generate such material, advances in catalyst design and supporting technology have allowed for the development of multi-stage configurations.

A multi-stage reactor configuration for manufacturing alpha-olefin polymers such as the one used in the Borstar PE 3G technology, has a multi-modal capability for manufacturing various polymers with desired end-use properties. In such a configuration, a combination of a series of slurry loops (typically, a pre-polymerization loop reactor and one or more loop reactors) and a gas phase reactor (GPR) containing a fluidized particle bed is employed in order to produce alpha-olefin polymers having a wide range of properties.

However, even in such state-of-the-art reactor configuration, the production of alpha-olefin, e.g. polyethylene (PE), polymer grades using a single site catalyst (SSC) faces limitations with respect to polymer density since it is difficult to produce polymers having low density values (such as below 912 kg/m³ in multi-stage processes or even below 895 kg/m³ in gas phase processes). In addition, incorporating comonomers in the main polymeric chain, in particular during the polymerization in the gas phase reactor, may be challenging, mainly due to: (i) heat-transfer limitations, (ii) a reduction of the diffusion of the comonomer in forming polymeric particles and (iii) sorption of comonomers in the forming polymeric particle. This is particularly relevant if high sticky material (such as ethylene/butane/hexene terpolymers) using high 1-hexene concentration are produced in the GPR.

For instance, during ethylene copolymerization, especially with a higher alpha-olefin such as 1-hexene, polymer particles are formed having a tendency to agglomerate (mainly due to their stickiness) forming agglomerated particles that are difficult to be fluidized due to the relatively large mass. Consequently, such agglomerated particles might fall to the bottom of the reactor causing difficulties in reactor operation (e.g. because they reduce or prevent the fluidization) resulting in most of the cases in reactor shut down. The inventors noticed that the formation of such sticky material can take place at any location inside the reactor's fluidization space (e.g., reactor's fluidized bed) and it is associated to the operating conditions of the GPR.

### Object of the invention

There is therefore a need for a method for manufacturing alpha-olefin polymers that prevents or controls the formation inside the gas phase reactor of polyolefin material that is sticky and therefore causes the above-mentioned problems. An object of the invention is to provide a solution fulfilling this need.

Another object of the invention is to provide a method for manufacturing alpha-olefin polymers, wherein the formation of agglomerated particles is preferably reduced or even prevented.

### Summary of the invention

In a first aspect, the invention provides a method for polymerizing an alpha-olefin polymer in a gas phase reactor containing a reaction zone comprising growing alpha-olefin polymer particles, wherein said growing particles comprise an amorphous phase having an amorphous phase density wherein the method comprises
A) operating the gas phase reactor with a set of polymerization parameters such that the amorphous phase density is between 790 kg/m³ to 860 kg/m³ inclusive.

In a second aspect, the invention provides a continuous method for polymerizing at least two alpha-olefin polymers having different densities in a single gas phase reactor containing a reaction zone comprising growing alpha-olefin polymer particles, the method comprising the steps of:
a) in the gas phase reactor carrying out the method according to the first aspect for producing a first alpha-olefin polymer having a first density;
b) optionally extracting the first alpha-olefin polymer from said gas phase reactor; and
c) in the gas phase reactor carrying out the method according to the first aspect to produce a second alpha-olefin polymer having a second density different from the first density.

In a third aspect, the invention provides a multi-stage polymerization process for polymerizing alpha-olefin polymers comprising the method to the first aspect.

In a fourth aspect, the invention provides a method for controlling or preventing the formation of agglomerates of growing alpha-olefin polymer particles in a gas phase reactor during polymerization of an alpha-olefin polymer, the gas phase reactor comprising a reaction zone comprising growing alpha-olefin polymer particles, wherein said growing particles comprise an amorphous phase having an amorphous phase density, the method comprising operating the gas phase reactor with a set of polymerization parameters such that the amorphous phase density is between 790 kg/m³ to 860 kg/m³ inclusive.

### Definitions

The "amorphous phase" of the polymer particles is a phase that has no ordered structure of polymer chains. The amorphous phase allows solvent and reactant molecules to adsorb onto said phase when coming in contact with it and diffuse therein, causing the swelling of said phase.

By "*crystalline phase*" of the polymer particles is a phase which is characterized by an order of the polymer chains in a crystal-like fashion. The crystalline phase, due to the close packing of the polymer chains, essentially does not allow solvent and reactant molecules to adsorb and diffuse therein, being essentially free thereof. Generally, the crystalline polymer phase has regular arrangement of the polymer chain and has a greater density than the amorphous polymer phase.

It is well-known that alpha-olefin polymer particles contain an amorphous phase and a crystalline phase, being possible to visualize and differentiate the presence and structure thereof by well-known and established techniques such as electron microscopy and electron diffraction. It is also possible to determine the density of these phases by for example using a method as presented later herein.

The term "*target density range*" for a given polymer phase, e.g. the amorphous phase, is a predefined range of density values. The density refers to the amorphous phase density at reactor conditions and composition, meaning after absorption of monomers, diluents, etc. It is not the density of the dry amorphous phase at ambient conditions. The inventors surprisingly noticed that for density values outside the predefined target range the tendency of the polymer particles to agglomerate is increased, which in turn may lead to a less efficient manufacturing process. The density of the amorphous phase and the effort to maintain it within a targeted range are therefore the means used in the present invention for controlling the formation of agglomerates.

### Description of the drawings

Figure 1 shows the effect of the inert diluent composition in the gas phase reactor on the density of the amorphous phase for various produced polymers.
Figure 2a shows the effect of the nitrogen concentration on the density of the amorphous phase of growing particles. Figure 2b shows the effect of the nitrogen concentration on sorbed 1-hexene/ethylene concentration ratio the amorphous phase of growing particles. Figure 2c shows the effect of the nitrogen concentration on the concentration of sorbed ethylene in the amorphous phase of growing particles.

### Detailed description of the invention

The invention provides a method for polymerizing an alpha-olefin polymer in a gas phase reactor operating with a set of polymerization parameters. The method of the invention, hereinafter "the inventive method", may involve the dynamic adjustment of polymerization parameters during the polymerization reaction, i.e. adjustments performed while the polymerization reaction takes place, in order to maintain the density of the amorphous phase of the alpha-olefin polymer within a certain targeted range.

It is an object of the invention to provide a method for polymerizing an alpha-olefin polymer in a gas phase reactor containing a reaction zone comprising growing alpha-olefin polymer particles, wherein said growing particles comprise an amorphous phase having an amorphous phase density and wherein the method comprises operating the gas phase reactor with a set of polymerization parameters such that the amorphous phase density is between 790 kg/m³ to 860 kg/m³ inclusive.

The inventors surprisingly observed that in a gas phase polymerization of alpha olefin the formation of agglomerated particles may be avoided, reduced or controlled by keeping the amorphous phase density equal or above 790 kg/m³. Therefore, the amorphous phase density in the method of the invention is between 790 kg/m³ to 860 kg/m³ inclusive. Preferably the amorphous phase density is between 790 kg/m³ to 850 kg/m³ inclusive, preferably between 790 kg/m³ to 840 kg/m³ inclusive, more preferably between 790 kg/m³ to 820 kg/m³ inclusive, most preferably between 790 kg/m³ to 810 kg/m³ inclusive. The upper limit of these ranges is determined also in view of the density of the target alpha polyolefin.

An amorphous phase density between 790 kg/m³ to 860 kg/m³ inclusive is achieved or maintained by suitably setting the polymerization parameters before the polymerization and if necessary, adjusting the polymerization parameters during polymerization reaction. The value of the polymerization parameters to operate the gas phase reactor such that the amorphous phase density is between 790 kg/m³ to 860 kg/m³ inclusive are determined using Sanchez-Lacombe equation of state as described herein.

Therefore preferably, the invention method comprises
i. setting a target for the density of the alpha-olefin polymer and simulating a first set of one or more polymerization parameters yielding said target density of the alpha-olefin polymer;
ii. setting a target amorphous density value for the amorphous phase of the growing polymer particles between 790 and 860 kg/m³ inclusive;
iii. determining a second set of one or more polymerization parameters using the Sanchez-Lacombe equation of state in accordance with the description by using as input said target amorphous density value and the first set of simulated polymerization parameters;
iv. adjusting/setting the operating conditions of the gas phase reactor to utilize polymerization parameters based on to those determined in step iii.

The gas phase reactor is accordingly operated with the values of the polymerization parameters determined according to steps iii such that the amorphous phase density is between 790 kg/m³ to 860 kg/m³ inclusive.

In a typical process such as those of the prior art, once the reactor's operating conditions are adjusted and the polymerization parameters are set, the polymerization is allowed to run without any modifications of said parameters. In fact, the polymerization parameters are constantly monitored in order to ensure that they stay as initially adjusted. In contradistinction with such a *modus operandi*, the method of the present invention is a dynamic method, in the sense that the polymerization parameters may be varied during the polymerization of the polymer, in order to maintain the densities of the amorphous phase within the targeted range.

For example, if the determined density of the amorphous phase during polymerization is 785 kg/m³ then the polymerization parameters are adjusted to bring the density of the amorphous phase to a value of at least 790 kg/m³ to avoid the formation of sticky material and particles agglomerates.

During the polymerization in the gas phase the amorphous phase density is not measured empirically, it is rather verified using the Sanchez-Lacombe equation of state as described herein. In other words, during the polymerization the polymerization parameters are monitored and tested in the Sanchez-Lacombe equation to verify whether the amorphous phase density value is satisfied. Should the parameters not satisfy the target amorphous phase density, they are recalculated and adjusted such that the target amorphous phase density is achieved or maintained. As a result of the recalculation one parameter or more than one parameters may need to be adjusted. If more than one parameter needs to be adjusted, the parameters can be adjusted contemporaneously or in sequence. For example, the polymerization temperature can be adjusted first, and the composition of the gas phase can be adjusted subsequently.

The polymerization parameters and the amorphous phase density may be monitored and determined at established time points during the polymerization reaction. There is no specific limitation as to how the time points are monitored, however, preferably, knowing that the polymerization reaction is carried out over a polymerization time, which is typically the same with a residence time of the polymer in the gas phase reactor, the time points are chosen to divide the polymerization time (or the residence time) in essentially equal intervals. Preferably, at least 3 time points are established during the polymerization time, more preferably at least 5 time points, most preferably at least 7 time points.

By "determining (the parameter/density) at established time points", is herein understood that at the established time points, samples of the polymer are taken from the reactor and e.g. their density is determined in accordance with the method of the invention as presented herein below. The determinations according to the invention are carried out during the polymerization of the polymer, in order to allow a dynamic adjustment of the polymerization parameters. Parameters such as the temperature may be directly monitored and measured in the gas phase reactor.

### Alpha-olefin polymer

Any alpha olefin polymer may be prepared according to the inventions methods. Preferably, the alpha-olefin polymer is an ethylene based polymer or an ethylene based copolymer. The ethylene copolymer is preferably an ethylene/C₃-C₁₀ alpha olefin copolymer. Ethylene copolymer shall also include ethylene terpolymers such as ethylene/1-butene/1-hexene terpolymer or ethylene/1-butene/1-octene terpolymer.

The alpha olefin polymer can be a monomodal or a multimodal alpha olefin polymer. Preferably, the monomodal or the multimodal alpha olefin polymer is a polyethylene or a polyethylene copolymer. Preferably the polyethylene or polyethylene copolymer is a multimodal (e.g. bimodal) polyethylene.

Preferably, the alpha olefin is a very low density polyethylene (VLDPE) or linear low density polyethylene (LLDPE).

VLDPE has a density in the range of 880-915 kg/m³. VLDPE may be ethylene homopolymer, ethylene copolymer with alpha olefin other than ethylene. Preferably, the VLPDE are ethylene terpolymer, preferably ethylene/1-butene/1-hexene or ethylene/1-butene/1-octene terpolymer.

LLDPE is copolymer of ethylene comprising between about 3% to about 10% by weight of an alpha-olefin comonomer. Suitable alpha olefin comonomers for LLDPE include propylene, 1-butene, 4-methyl-1-pentene, 1-hexene, and 1-octene. LLDPE resins are characterized by a density in the range of between about 910 and 940 kg/m³.

### Growing particles

As disclosed above the gas phase reactor comprises polymer growing particles. Growing particles are so defined because the polymer is growing on these particles to reach the final desired structure. The polymer growing particles comprise an amorphous phase. Growing particles may further comprise a crystalline phase. Preferably, the growing particles comprise an amorphous phase and a crystalline phase.

The amorphous phase has a density. As explained above, the purpose of the method of the invention is to carry out the polymerization in the gas phase reactor at polymerization conditions such that the density of the amorphous phase in the gas phase reactor is between 790 kg/m³ to 860 kg/m³ inclusive. Advantageously, maintaining this amorphous phase density of the growing particles in the gas phase reactor avoids the formation of sticky material and particles agglomerates which in turn would cause severe operability issues in the gas phase reactor. The amorphous phase density of the growing particles in the gas phase reactor is between 790 kg/m³ to 860 kg/m³ inclusive, preferably between 790 kg/m³ to 850 kg/m³ inclusive, more preferably between 790 kg/m³ to 840 kg/m³ inclusive, most preferably between 790 kg/m³ to 820 kg/m³ inclusive.

In the inventive method, in addition or alternative to the amorphous phase density of the polymer growing particles, the density of the polymer growing particles as such is used.

The values of the polymerization parameters to operate the gas phase reactor such that the growing particles amorphous density is between 790 kg/m³ to 860 kg/m³ inclusive are determined using the Sanchez-Lacombe equation of state as described herein. The growing particles amorphous density is not measured empirically. It is set in the Sanchez-Lacombe equation and the values of the polymerization parameters are tested in the equation to verify that the growing particles amorphous density value is satisfied. Should the parameters do not satisfy the target growing particles amorphous density, they are recalculated and adjusted such that the growing particles amorphous density is achieved or maintained. As a result of the recalculation one parameter or more than one parameter may need to be adjusted. If more than one parameter needs to be adjusted, the parameters can be adjusted contemporaneously or in sequence. For example, the polymerization temperature can be adjusted first, and the composition of the gas phase can be adjusted subsequently.

### Polymerization parameters

The gas phase reactor is operating with polymerization parameters such that the amorphous phase density is maintained in the ranges as disclosed above. As mentioned, the polymerization parameters are set or adjusted to bring or maintain the amorphous phase density within the target range as disclosed above. The gas phase reactor is operating with these polymerization parameters. The polymerization parameters are monitored during the polymerization in the gas phase reactor to assure that the targeted amorphous phase density is maintained.

Preferably, the polymerization parameters are chosen from the group of parameters consisting of polymerization temperature, polymerization pressure of the gas phase reactor, composition of the gas phase and combinations thereof. More preferably, the polymerization parameters are chosen from the group consisting of a polymerization temperature, a polymerization pressure, an alpha-olefin monomer concentration, a molar ratio of an alpha-olefin co-monomer to alpha-olefin monomer such as molar ratios of one or several alpha-olefin co-monomers to alpha-olefin monomer, a molar ratio of a chain transfer agent to alpha-olefin monomer, an inert diluent concentration, an inert diluent composition and combinations thereof. More preferably, the polymerization parameters is chosen from the polymerization parameters preferably an inert diluent concentration or composition.

### Gas phase reactor temperature (polymerization temperature)

The gas phase reactor temperature is one of the polymerization parameters as set above. Any temperature that provides the target density within the targeted range is suitable for being used according to the present invention. However, it has been seen that a high temperature tends to lower the amorphous phase density and the growing particle density thereby potentially causing aggregation of the particles and in turn poor operability of the gas phase reactor.

Preferably, the gas phase reactor temperature is in the range of from 40 to 120°C. More preferably, the polymerization temperature is adjusted to a temperature in the range of from 60 to 100°C, more preferably in the range of from 65 to 85 °C.

Methods to change or maintain the temperature within a gas phase reactor are known in the art.

### Gas phase reactor pressure

The gas phase reactor pressure is one of the polymerization parameters as set above. Any pressure that provides a target density within the ranges as set above is suitable for being used according to the present invention.

Preferably the gas phase reactor pressure is in the range of from 3 to 30 barg. More preferably, the gas phase reactor pressure is the range of from 15 to 25 barg, preferably in the range of 16 to 22 barg.

Methods to adjust and control the pressure within a gas phase reactor are known in the art.

The components of the gas phase reactor that are in the gaseous state determine the pressure of the gas phase reactor. By maintain or by changing the molar compositions of the components and therefore their partial pressures the overall gas phase reactor pressure is maintained or changed, respectively.

It has been seen, for example, that the target density of the amorphous phase is achieved or maintained when the pressure of the gas phase reactor is at least 2 bar lower than the nominal operating pressure. Optionally the partial pressure of the ethylene is increase at the expense of the diluent (e.g. propane).

It is therefore preferred that the operating pressure in the gas phase reactor is 5% lower than the corresponding pressure that would have been typically used to prepare an alpha polyolefin having a target density without considering the target density of the amorphous phase of the growing particles or the density of the growing particles i.e., without applying the invention method. More preferably, the pressure is 10% lower than the corresponding pressure that would have been typically used to prepare an alpha polyolefin having a target density without considering the target density of the amorphous phase of the growing particles or the density of the growing particles i.e., without applying the invention methods. Even more preferably the pressure is 15% lower than the corresponding pressure that would have been typically used to prepare an alpha polyolefin having a target density without considering the target density of the amorphous phase of the growing particles or the density of the growing particles i.e., without applying the invention methods.

Without being bound to a theory, it is believed that the lower pressure increases the density of the growing particles, improves the heat transfer between the solid growing particles and the gas phase thereby reducing or avoiding the formation of particles agglomerates and sticky materials.

### Alpha olefin monomer and comonomer and ratio thereof

The alpha olefin monomer is chosen in dependence of the target alpha olefin polymer or copolymer. The monomer is for example ethylene or propylene.

Preferably, the polymer is an ethylene-based polymer. Accordingly, ethylene is a preferred monomer.

The monomer concentration is one of the polymerization parameters as set above. The alpha-olefin monomer concentration is expressed as the mol% of the alpha-olefin monomer over the total moles of the gas phase composition. The alpha olefin monomer in the gas phase reactor is gaseous and therefore contributes to the pressure in the gas phase reactor.

With regard to the concentration of alpha-olefin monomer, any concentration aimed to provide the target alpha-olefin polymer, the target amorphous phase density or the growing particle density is suitable according to the present invention. It is preferred that the alpha-olefin monomer concentration is in the range of from 1 to 60 mol% based on the total moles of gas phase composition. More preferably, the alpha-olefin monomer concentration is in the range of from 10 to 40 mol% based on the total moles of gas phase composition. Even more preferably, the alpha-olefin monomer concentration is in the range of from 20 to 30 mol% based on the total moles of gas phase composition.

The gas phase reactor may further comprise one or more alpha olefin comonomers. The alpha olefin comonomer or comonomers are chosen in dependence of the target alpha olefin copolymer.

Preferably, the comonomers are alpha-olefin comonomers having from 3 to 10 carbon atoms. Preferably, the comonomer is selected from 1-butene, 1-hexene, 4-methyl-1-pentene, 1-octene, 1-decene or a combination thereof. More preferably, the comonomer is 1-butene or 1-hexene or 1-octene or a combination thereof. Most preferably, the comonomer is 1-hexene or 1-butene or a combination thereof.

The alpha-olefin comonomer concentration is one of the polymerization parameters as set above. The alpha-olefin comonomer concentration is expressed as the mol% of the alpha-olefin comonomer over the total moles of the gas phase composition. The alpha olefin comonomer in the gas phase reactor is gaseous and therefore contributes to the pressure in the gas phase reactor.

With regard to the alpha-olefin comonomer concentration, any concentration aimed to provide the target copolymer or the target amorphous phase density is suitable according to the present invention. It is preferred that the alpha-olefin comonomer concentration is in the range of from 0.1 to 20 mol% based on the total moles of gas phase composition. More preferably, the alpha-olefin comonomer concentration is in the range of from 0.2 to 15 mol% based on the total moles of gas phase composition. More preferably, the alpha-olefin comonomer concentration in the range of from 0.4 to 10 mol% based on the total mol% of gas phase composition.

The molar of ratio alpha-olefin comonomer concentration to alpha-olefin monomer is one of the polymerization parameters as set above. In the context of the molar ratio, the "alpha-olefin comonomer" refers to the concentration of all the alpha-olefin comonomers present in the gas phase of the gas phase reactor. Solid particles such as the polymer and catalyst particles are not considered "gas phase".

It is preferred that the molar ratio of the alpha-olefin comonomer to alpha-olefin monomer is in the range of from 0 to 1200 mol/kmol. More preferably, the molar ratio of the alpha-olefin comonomer to alpha-olefin monomer is in the range of from 1 mol/kmol to 900 mol/kmol.

Preferably, when the alpha olefin monomer is ethylene and the comonomer is 1-hexene, it is preferred that the molar ratio of 1-hexene to ethylene is in the range of from 1 to 200 mol/kmol.

### Chain transfer agent

The gas phase typically comprises a chain transfer agent to control the molecular weight (melt index) of the polymer via chain transfer reactions. Preferably, the chain transfer agent is hydrogen.

The molar ratio of the chain transfer agent to alpha-olefin monomer is one of the polymerization parameter as set above. The molar ratio can be adjusted both by adjusting the concentration of the alpha olefin monomer or the concentration of the chain transfer or of both. It is preferred that the molar ratio of the chain transfer agent to the alpha-olefin monomer is in the range of from 0 to 200 mol/kmol. More preferably, the molar ratio of the chain transfer agent to alpha-olefin monomer is in the range of from 0.1 mol/kmol to 100 mol/kmol.

### Inert diluent

The inert diluent concentration and the inert diluent composition are two of the polymerization parameters as set above.

The gas phase contains an inert diluent (i.e., inert gas) to aid providing sufficient linear velocity in order to achieve a smooth fluidization, and to balance the difference between the partial pressure of the monomers and the total pressure required in the gas phase. Preferably, the inert diluent comprises nitrogen, C₃ to C₁₂ alkanes (branched alkanes or linear alkanes), or mixtures thereof.

Suitable examples of alkane include propane, butane, pentane and hexane.

More preferably the inert diluent comprises an inert gas chosen from the group consisting of nitrogen, at least one C₃ to C₁₂ alkane, and mixtures thereof, wherein preferably the C₃ to C₁₂ alkane is propane, pentane or a mixture thereof. Most preferably, the inert diluent comprises nitrogen, propane and/or pentane. Most preferably, the inert diluent comprises nitrogen and propane.

The inert diluent concentration is expressed as the mol% of inert diluent over the total moles of the gas phase composition. The inert diluent in the gas phase reactor is gaseous and therefore contributes to the pressure in the gas phase reactor.

Preferably the inert diluent concentration is in the range of from 40 to 80 mol% based on the total mol% of gas phase composition. More preferably, the inert diluent concentration is in the range of from 45 to 75 mol% based on the total mol% of gas phase composition. Preferably, the concentration is in the range of from 50 to 60 mol% based on the total mol% of gas phase composition, when the inert diluent consists of an alkane.

Preferably, the diluent consists of a mixture of an alkane and nitrogen. The alkane is preferably propane and/or pentane, most preferably propane. Preferably, the nitrogen concentration is in the range of from 0 to 65 mol% based on the total mol% of gas phase composition. More preferably, the nitrogen concentration is in the range of from 10 to 35 mol% based on the total mol% of gas phase composition. Even more preferably, the nitrogen concentration is in the range of from 10 to 30 mol% based on the total mol% of gas phase composition. Accordingly, the concentration of the alkane component is in the range 10 to 70 mol %, 15 to 70 mol%, 20 to 70 mol% based on the total mol% of gas phase composition. The alkane component can be a mixture of alkane such as a mixture of propane and pentane.

In certain instances, it is preferred that the concentration of nitrogen based on the gas phase composition is higher than the concentration of alkane based on the total concentration of the gas phase composition. It has been seen that during the polymerization in the gas phase reactor it might be necessary to enhance the removal of the heat from the growing particles. In a gas phase reactor the heat transfer of the heat developed during the polymerization reaction is limited. On the other hand, overheating of the growing particles entails a high risk of forming particle agglomeration (agglomerate). The agglomerates cannot be fluidized due to their large mass and are deposited on the bottom part of the gas phase reactor causing difficulties in the reaction operation. It has been seen that a higher nitrogen concentration or the increase of the nitrogen concentration vis a vis the other inert diluent component such as an alkane e.g. propane or pentane increase the amorphous phase density and therefore the growing particles density. The increase density improves the heat transfer coefficient between the growing particles and the gas phase, thereby avoiding the formation of agglomerates and in turn grant a smooth operability of the gas phase reactor. It has been further seen that a further addition of pentane to the same concentration of propane and nitrogen further reduces the density.

The gas phase reactor is for example operated at one or more of the following parameters:
the polymerization temperature in the range of from 40 to 120°C, preferably in the range of from 60 to 100°C, more preferably in the range of from 65 to 90 °C;
the pressure in the range of from 5 to 30 barg, preferably in the range of from 15 to 25 barg, more preferably in the range of 16 to 22 barg;
the alpha-olefin monomer concentration in the range of from 1 to 50 mol%, preferably in the range of from 10 to 40 mol%, more preferably in the range of from 20 to 30 mol%;
the molar ratio of the alpha olefin comonomer to alpha-olefin monomer in the range of from 0 to 1200 mol/kmol, preferably 1 to 900 mol/kmol;
the molar ratio of the chain transfer agent to alpha-olefin monomer in the range of from 0 to 200 mol/kmol, preferably 0.1 to 200 mol/kmol;
the nitrogen concentration in the range of 5 to 70 mol%, preferably in the range of from 5 to 60 mol%, more preferably in the range of from 5 to 50 mol%;
the alkane concentration, preferably the propane concentration, in the range of 10 to 70 mol %, preferably in the range of 15 to 70 mol%, more preferably in the range of 20 to 70 mol%
wherein the mol% are based on the total mol% of gas phase composition.

### Gas phase reactor and the catalyst

Any gas phase reactor is suitable to carry out the method of the invention. Preferably, the gas phase reactor is a gas phase fluidized bed reactor. The gas phase reactor comprises a gas phase, a catalyst system typically in the form a catalyst particles or pre-polymerized catalyst particles and a polymer which is polymerized in the gas phase as growing particles disclosed above wherein the particles comprises the catalyst.

The gas phase component should have a minimum superficial velocity in order to be able to fluidize the polymer particles. Any superficial gas velocity typically used in the preparation of alpha olefin polymers is suitable for utilization according to the present invention. It is preferred that the gas phase reactor is operated at a superficial gas velocity value in the range of from 0.1 m/s to 0.8 m/s, preferably from 0.2 m/s to 0.7 m/s.

There is no particular limitation as to the type of catalyst. The catalyst is the typical catalyst used in a gas phase reaction polymerization. The catalyst is preferably in the particulate form. The catalyst can be a Ziegler-Natta or a Single-site (SS) catalyst, Ziegler-Natta catalysts are known in the art. Single site catalysts are known in the art. Single site catalysts are for example disclosed in patent applications EP2338920, EP2338921, EP08022586.

The mean residence time in the gas phase is such that the target alpha olefin polymer is formed. It is preferred that the residence time is in the range from 1h to 4h, more preferably from 1.5h to 4.0 h, even more preferably 2.0 h to 3.5 h.

### Continuous method

The invention further provides a continuous method for polymerizing at least two different alpha-olefin polymers in a single gas phase reactor containing a reaction zone. The method comprises carrying out the method disclosed hereinabove for producing a first alpha-olefin polymer; optionally extracting the first alpha-olefin polymer from said gas phase reactor; and in the gas phase reactor carrying out the same method as disclosed above to produce a second alpha-olefin polymer. The set of polymerization parameters are determined using the Sanchez-Lacombe equation of state as disclosed herein. The set of polymerization parameters to produce the first alpha-olefin is modified to produce the second alpha-olefin.

Accordingly, the method comprises the steps of:
1. operating the gas phase reactor with a set of polymerization parameters such that the amorphous phase density of polymers growing particles is between 790 kg/m³ to 860 kg/m³ inclusive to produce a first alpha-olefin polymer according to the invention method as disclosed above;
2. optionally extracting the first alpha-olefin polymer from said gas phase reactor;
3. continuously modifying the set of polymerization parameters of step 1 before, during and/or after the extraction in step 2. to obtain a second set of polymerization parameters such that the amorphous phase density of polymers growing particles is between 790 kg/m³ to 860 kg/m³ inclusive to produce a second alpha-olefin polymer;
4. operating the gas phase reactor with the set of polymerization condition of step 3 according to the invention method as disclosed above.

Bimodal or multimodal alpha polyolefin may be produced continuously in the gas phase reactor. For example, if a bimodal or multimodal alpha olefin is produced the step of extracting the (first) alpha-olefin polymer may not carried out and the second or further alpha-olefin polymer is produced in the presence of the first or previous formed alpha-olefin polymer.

### Multi-stage polymerization

The present invention further provides a multi-stage polymerization process for preparing an alpha-olefin polymer comprising the method polymerizing an alpha-olefin polymer in a gas phase reactor containing a reaction zone comprising growing alpha-olefin polymer particles, wherein said growing particles comprise an amorphous phase having an amorphous phase density and wherein the method comprises operating the gas phase reactor with a set of polymerization parameters such that the amorphous phase density is between 790 kg/m³ to 860 kg/m³ inclusive.

Multi-stage polymerization processes are known in the art. A multi-stage process in addition to the gas phase reactor polymerization, for example, comprises a pre-polymerization step carried out in a pre-polymerization loop reactor and at least one polymerization step carried out in a loop polymerization reactor (e.g. a loop reactor). A typical multi-stage process comprises for example a pre-polymerization step, a first polymerization step carried out e.g. in a loop reactor and a second polymerization step e.g. carried out in the gas phase reactor.

For example, a multistage polymerization process according to the invention can be used for the production of a terpolymer. For example, a pre-polymerization is first carried out in the presence of the monomer, the comonomer and the catalyst followed by a polymerization in a loop reactor. The subsequent polymerization with a second comonomer is carried out in a gas phase reactor according to the invention method.

For example, the terpolymer ethylene/1-butene/1-hexene can be prepared according to the method of the invention. A catalyst such as a single site catalyst can be pre-polymerized in the presence of ethylene and 1-butene and transferred in a loop reactor wherein the ethylene/1-butene copolymer is prepared. This polymeric material is transferred in a gas phase reactor. The further copolymerization with 1-hexene is carried out according to the invention method to prepare the terpolymer ethylene/1-butene/1-hexene. The same process can be used, for example, to prepare the terpolymer ethylene/1-butene/1-octene.

The alpha olefin polymer once it reaches the desired properties is preferably further processed to remove the hydrocarbon residuals and to obtain a polymer powder. The alpha olefin polymer powder may subsequently be pelletized.

### Method for controlling the growing particles agglomeration

The present invention further provides a method for controlling and/or preventing the formation of agglomerates of growing alpha-olefin polymer particles in a gas phase reactor during polymerization of an alpha-olefin polymer, the gas phase reactor comprising a reaction zone comprising growing alpha-olefin polymer particles, wherein said growing particles comprise an amorphous phase having an amorphous phase density, the method comprises operating the gas phase reactor with a set of polymerization parameters such that the amorphous phase density is between 790 kg/m³ to 860 kg/m³ inclusive. The operation of the gas phase reactor with a set of polymerization parameters such that the amorphous phase density is between 790 kg/m³ to 860 kg/m³ inclusive is carried out as disclosed in the present description.

During gas phase copolymerization polymer particles are formed having a tendency to agglomerate (mainly due to their stickiness) forming agglomerated particles that are difficult to be fluidized due to the relatively large mass. Consequently, such agglomerated particles might fall to the bottom of the reactor causing difficulties in reactor operation (e.g. because they disturb the smooth fluidization and deteriorate the homogeneity of the fluidization regime) resulting in most of the cases in reactor shut down.

Advantageously the present method of polymerization in the gas phase reactor comprising operating the gas phase reactor with a set of polymerization parameters such that the amorphous phase density is between 790 kg/m³ to 860 kg/m³ inclusive avoids or controls or prevents the formation of the particles agglomerates thereby allowing a smooth operability of the reactor avoiding the shut-down of the gas phase reactor.

### Test methods

### a) Density of the amorphous polymer phase:

The Sanchez-Lacombe equation of state (EoS) was used to calculate the density of the amorphous polymer phase.

The Sanchez-Lacombe equation of state and the method for determining the amorphous density is disclosed in Vassileios Kanellopoulos, Georgios Dompazis, Bill Gustafsson, Costas Kiparissides, "Comprehensive Analysis of Single-Particle Growth in Heterogeneous Olefin Polymerization: The Random-Pore Polymeric Flow Model", Ind. Eng. Chem. Res. 2004, 43, 17, 5166-5180)

The Sanchez-Lacombe equation of state and the method to determine the amorphous density based on are known in the art for example in references:
Isaac C. Sanchez, Robert H. Lacombe, "An Elementary Molecular Theory of Classical Fluids", J. Phys. Chem. 1976, 80, 2352,
Isaac C. Sanchez, Robert H. Lacombe, "Statistical Thermodynamics of Polymer Solutions", Macromolecules 1978, 11(6), 1145
Vasileios Kanellopoulos, Dimitrios Mouratides, Prokopis Pladis, Costas Kiparissides, "Prediction of Solubility of α-Olefins in Polyolefins Using a Combined Equation of State - Molecular Dynamics Approach", Ind. Eng. Chem. Res. 2006, 45, 5870
Mark A. McHugh, Val J. Krukonis, "Supercritical Fluid Extraction Principles and Practice", 2nd edition, Butterworth-Heinemann Publishing, Newton, MA 1994, pages 120 - 127

### b) Melt flow rate (MFR)

The melt flow rate is measured as the MFR₂ in accordance with ISO 1133 (230°C, 2.16 kg load) for polypropylene (190°C 2.16kg load) for polyethylene and is indicated in g/10 min. The MFR₂ is an indication of the flowability, and hence the processability, of the polymer. The higher the melt flow rate, the lower the viscosity of the polymer.

### Examples

### Reference sample 1 (RS1)

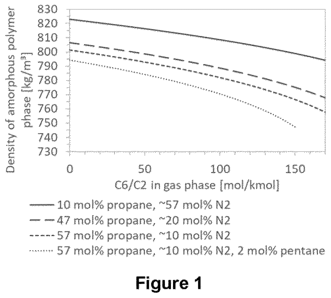

Different compositions of the inert diluent were tested at 75 °C and 20 barg to verify the effect of the gas composition on the polyethylene amorphous phase density in the gas phase reactor comprising polyethylene as monomer and hexene-1 (C₆) as comonomer. The results are reported in figure 1. In figure 1 the density of the amorphous phase is shown as a function of the C₆/C₂ ratio in the gas phase for four different inert diluent (propane and nitrogen) compositions. The higher the amount of nitrogen fed to the gas phase the higher the density of the amorphous phase. However, the addition of pentane as additional inert diluent tends to lower the amorphous phase density. A higher ratio of comonomer:monomer i.e. higher concentrations of comonomer decreases the density of the amorphous phase.

### Reference sample 2 (RS2)

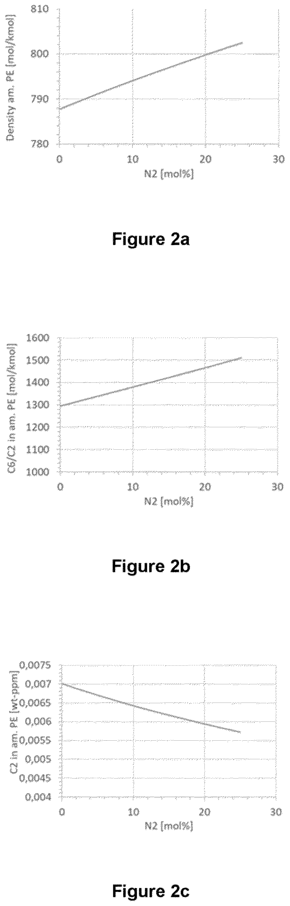

In the preparation of the target terpolymer ethylene-1-butene-1-hexene having a density below 920 kg/m³ (at ambient conditions) different nitrogen concentrations were tested to verify the effect of the nitrogen concentration on the amorphous phase density, on the C₆/C₂ ratio in the amorphous phase, and on the C₂ concentration and on the C₆ concentration at T = 75 °C and P = 21 barg. The terpolymer was prepared in a multi-stage ethylene copolymerization process. The presence of nitrogen in a concentration higher than 5 mol% result in an amorphous phase density that assured a smooth operability of the gas phase reactor. Figure 2a reports the effect of the nitrogen concentration on the density of the growing particles. Consistently with the results of RE1, the increase of nitrogen concentration results in a higher growing particle density. The effect of an increase concentration of the nitrogen on the ratio C₆/C₂ monomer and on the concentration C₂ monomer is shown in figures 2b and 2c. Increased nitrogen concentration leads to lower sorption of C₂ in the polymer and higher C₆/C₂ ratio in the particle due to competitive multicomponent diffusion processes.

### Comparative example 1- CE1

A single site catalyst, having an initial size of 25 microns, span (i.e., (d90 - d10)/d50) of 1.4 was used to produce LLDPE film. The catalyst was first pre-polymerized in a prepolymerisation reactor at T=50 °C and P = 65 barg. More specifically, 900 kg/h of ethylene, 95 kg of 1-butene per tn ethylene, 0.30 Kg hydrogen per tn of propane and 6.50 tn propane/h (diluent) were fed to pre-polymerization reactor and the mean residence time was 30 mins.

The particulate material was transferred to a split loop reactor configuration having volume equal to 80 m³. Ethylene (C₂), propane (C₃ diluent), 1-butene (C₄) and hydrogen (H₂) were fed to the reactors and the polymerisation conditions were T = 85 °C, P = 64 barg and the mean residence time was equal to 1.0 h. The molar ratio of H₂/C₂ and C₄/ C₂ were 0.4 mol/kmol and 40 mol/kmol, respectively, and the overall catalyst productivity was 1.2 kg/gcat, the material density equals to 940 kg/m³ and the MFR₂ equals to 6.0 g/10min.

Subsequently, the polymeric material was fed to a gas phase reactor where the mean residence time equals to 2.5 hours, the overall pressure was 20 barg, the temperature was 75 °C and the gas phase composition was 66.95 mol% propane, 5 mol% nitrogen, 25 mol% ethylene, 1.0 mol% C6, 0.05 mol% H₂ and 2 mol% n-pentane. The size of the gas phase reactor has been 3.5 m diameter, the fluidized bed height has been 18 m and the superficial gas velocity (SGV) was equal to 0.5 m/s. The overall mass flow rate of the recirculation gas was 520 tn/h. the final material properties have been density equal to 913 kg/m³ and MFR₂ equal to 1.3 g/10min. The amorphous polymer phase density was 782 kg/m³ and after two days of operation, the reactor was shut down due to process hick ups caused by soft-type agglomerates that have been formed.

### Comparative example 2 - CE2

The procedure of CE1 was repeated with the exception that the GPR has been operated at overall pressure of 20 barg, temperature of 75 °C and gas phase composition of 67.55 mol% propane (C₃), 5 mol% nitrogen (N₂), 25 mol% ethylene (C₂), 0.4 mol% 1-hexene (C₆), 0.05 mol% hydrogen (H₂) and 2 mol% n-pentane (C₅). The amorphous polymer phase density was 786 kg/m³ and after three days of operation, the reactor was shut down due to process hick ups caused by soft-type agglomerates that have been formed.

### Inventive example 1- IE1

The procedure of CE1 was repeated with the exception that the composition of the GPR was 46.95 mol% propane (C₃), 25 mol% nitrogen (N₂), 25 mol% ethylene (C₂), 1.0 mol% 1-hexene (C₆), 0.05 mol% hydrogen (H₂) and 2 mol% n-pentane (C₅). The amorphous polymer phase density was 795 kg/m³ and the process has been stable for three weeks and producing the targeted grade without experiencing any operability issue.

### Inventive example 2 -IE2

The procedure of CE1 was repeated with the exception that the composition of the GPR was 47.55 mol% propane (C₃), 25 mol% nitrogen (N₂), 25 mol% ethylene (C₂), 0.4 mol% 1-hexene-(C₆), 0.05 mol% hydrogen (H₂) and 2 mol% n-pentane (C₅). The amorphous polymer phase density was 798 kg/m³ and the process has been stable for three weeks and producing the targeted grade without experiencing any operability issue.

**Table 1: Summary of the examples.**

| **Ex.** | **Pressure (barg)** | **H2 (mol%)** | **C2 (mol%)** | **C3 (mol%)** | **C5 (mol%)** | **C6 (mol%)** | **N2 (mol%)** | **ρam (kg/m³)** |
|---|---|---|---|---|---|---|---|---|
| CE1 | 20 | 0.05 | 25 | 66.95 | 2 | 1 | 5 | 782 |
| IE1 | 20 | 0.05 | 25 | 46.95 | 2 | 1 | 25 | 795 |
| CE2 | 20 | 0.05 | 25 | 67.55 | 2 | 0.4 | 5 | 786 |
| IE2 | 20 | 0.05 | 25 | 47.55 | 2 | 0.4 | 25 | 798 |

In IE1 and IE2 a higher amount of nitrogen that compensating the lower amount of propane leads to a higher density thereby increasing the operability condition and avoiding the formation of sticky material.

### Comparative example 3- CE3

A single site catalyst, having an initial size of 25 microns, span (i.e., (d90 - d10)/d50) of 1.4 was used to produce LLDPE film. The catalyst was first pre-polymerized in a prepolymerisation reactor at T=50 °C and P = 65 barg. More specifically, 900 kg/h of ethylene, 95 kg of 1-butene per tn ethylene, 0.30 Kg hydrogen per tn of propane and 6.50 tn propane/h (diluent) were fed to prepolymerisation reactor and the mean residence time was 30 mins.

The particulate material was transferred to a split loop reactor configuration having volume equal to 80 m³. Ethylene (C₂), propane (C₃)(diluent), 1-butene (C₄) and hydrogen (H₂) were fed to the reactors and the polymerisation conditions were T = 85 °C, P = 64 barg and the mean residence time was equal to 1.0 h. The molar ratio of H₂/C₂ and C₄/C₂ were 0.4 mol/kmol and 40 mol/kmol, respectively, and the overall catalyst productivity was 2.5 kg/gcat, the material density equals to 940 kg/m³ and the MFR₂ equals to 6.0 g/10min.

Subsequently, the polymeric material was fed to a gas phase reactor where the mean residence time equals to 2.5 hours, the overall pressure was 20 barg, the temperature was 75 °C and the gas phase composition was 73.95 mol% propane, 25 mol% ethylene, 1.0 mol% 1-hexene (C₆), 0.05 mol% H₂. The size of the gas phase reactor has been 3.5 m diameter, the fluidized bed height has been 18 m and the superficial gas velocity (SGV) was equal to 0.5 m/s. The overall mass flow rate of the recirculation gas was 520 tn/h. The final material properties have been density equal to 915 kg/m³ and MFR₂ equal to 1.5 g/10min. The reactor was operated for four days and after that it was shut down due to process hick ups caused by agglomerates and sheeting detected on the reactor walls.

### Comparative example 4 - CE4

The procedure of CE3 was repeated with the exception that the GPR has been operated at overall pressure of 20 barg, temperature of 75 °C and gas phase composition of 68.55 mol% propane, 4 mol% nitrogen, 25 mol% ethylene, 0.4 mol% C6, 0.05 mol% H2 and 2 mol% pentane. The final material properties have been density equal to 918 kg/m³ and MFR₂ equal to 1.5 g/10min. The reactor was operated for seven days and after that, it was shut down due to process hick ups caused by agglomerates and sheeting detected on the reactor walls.

### Inventive example 3 - IE3

The procedure of CE5 was repeated with the exception that the composition of the GPR was 58.95 mol% propane (C₃), 15 mol% nitrogen (N₂), 25 mol% ethylene (C₂), 1.0 mol% hexene-1 (Ge) and 0.05 mol% hydrogen (H₂). The process has been stable for two weeks and producing the targeted terpolymer grade without experiencing any operability issue. Reactor walls have been inspected and no indication of fouling was found.

### Inventive example 4 - IE4

The procedure of CE6 was repeated with the exception that the composition of the GPR was 52.55 mol% propane (C₃), 20 mol% nitrogen (N₂), 25 mol% ethylene (C₂), 0.4 mol% hexene-1 (C₆), 0.05 mol% hydrogen (H₂) and 2 mol% pentane (C₅). The process has been stable for five weeks and producing the targeted terpolymer grade without experiencing any operability issue. Reactor walls have been inspected and no indication of fouling was found.

**Table 2: Summary of examples.**

| **Ex.** | **Press ure (bar)** | **H2 (mol %)** | **C2 (mol %)** | **C3 (mol %)** | **C5 (mol %)** | **C6 (mol%)** | **N2 (mol%)** | **ram (kg/m³)** | **Operabil ity** |
|---|---|---|---|---|---|---|---|---|---|
| CE3 | 20 | 0.05 | 25 | 73.95 | 0 | 1 | 0 | 786 | poor |
| CE4 | 20 | 0.05 | 25 | 68.55 | 2 | 0.4 | 4 | 785 | poor |
| IE3 | 20 | 0.05 | 25 | 58.95 | 0 | 1 | 15 | 795 | stable |
| IE4 | 20 | 0.05 | 25 | 52.55 | 2 | 0.4 | 20 | 795 | stable |

IE3 and IE4 show that for a nitrogen concentration greater than 10 mol% the gas phase reaction operability is stable.

### Comparative example 5 - CE5

A single site catalyst, having an initial size of 25 microns, span (i.e., (d90 - d10)/d50) of 1.4 was used to produce LLDPE film. The catalyst was first pre-polymerized in a prepolymerisation reactor at T=50 °C and P = 65 barg. More specifically, 900 kg/h of ethylene, 95 kg of 1-butene per tn ethylene, 0.30 Kg hydrogen per tn of propane and 6.50 tn propane/h (diluent) were fed to pre-polymerization reactor and the mean residence time was 30 mins.

The particulate material was transferred to a split loop reactor configuration having volume equal to 80 m³. Ethylene (C₂), propane (C₃), (diluent), 1-butene (C₄) and hydrogen (H₂) were fed to the reactors and the polymerisation conditions were T = 85 °C, P = 64 barg and the mean residence time was equal to 1.0 h. The molar ratio of H₂/C₂ and C₄/C₂ were 0.4 mol/kmol and 40 mol/kmol, respectively, and the overall catalyst productivity was 2.5 kg/gcat, the material density equals to 940 kg/m³ and the MFR₂ equals to 6.0 g/10min.

Subsequently, the polymeric material was fed to a gas phase reactor where the mean residence time equals to 2.5 hours, the overall pressure was 22 barg, the temperature was 75 °C and the gas phase composition was 73.95 mol% propane (C₃), 25 mol% ethylene (C₂), 1.0 mol% hexene-1 (C₆), 0.05 mol% hydrogen (H₂). The size of the gas phase reactor has been 3.5 m diameter, the fluidized bed height has been 18 m and the superficial gas velocity (SGV) was equal to 0.5 m/s. The overall mass flow rate of the recirculation gas was 550 tn/h. The final material properties have been density equal to 913 kg/m³ and MFR₂ equal to 1.5 g/10min. The reactor was operated for two days and after that it was shut down due to process hick ups caused by agglomerates.

### Inventive example 5 - IE5

The procedure of CE5 was repeated with the exception the GPR has been operated at overall pressure of 18 barg, temperature of 75 °C and gas phase composition of 63.75 mol% propane (C₃), 35 mol% ethylene (C₂), 1.2 mol% hexene-1 (C₆) and 0.05 mol% hydrogen (H₂). The final material properties have been density equal to 913 kg/m³ and MFR₂ equal to 1.5 g/10min. The reactor was operated for two weeks without any operability issue.

### Inventive example 6 - IE6

The procedure of CE8 was repeated with the exception that the GPR has been operated at overall pressure of 18 barg, temperature of 75 °C and gas phase composition of 58.55 mol% propane (C₃), 40 mol% ethylene (C₂), 1.4 mol% hexene-1 (C₆) and 0.05 mol% hydrogen (H₂). The final material properties have been density equal to 910 kg/m³ and MFR₂ equal to 1.5 g/10min. The reactor was operated for two weeks without any operability issue.

**Table 3: Summary of the examples.**

| **Ex.** | **Pressure (bar)** | **C2 (mol%)** | **C3 (mol%)** | **C6 (mol%)** | **Polymer density (kg/m³)** | **ρam (kg/m³)** | **Operability** |
|---|---|---|---|---|---|---|---|
| CE5 | 22 | 25 | 73.95 | 1 | 913 | 782 | poor |
| IE5 | 18 | 35 | 63.75 | 1.2 | 913 | 794 | stable |
| IE6 | 18 | 40 | 58.55 | 1.4 | 910 | 795 | stable |

The examples show that for a high concentration of C6, at a lower pressure with a concomitant increase of the monomer (C2) partial pressure the operability of gas phase reactor is stable.

## Claims

1. A method for polymerizing an alpha-olefin polymer in a gas phase reactor containing a reaction zone comprising growing alpha-olefin polymer particles, wherein said growing particles comprise
an amorphous phase having an amorphous phase density
wherein the method comprises
A) operating the gas phase reactor with a set of polymerization parameters such that the amorphous phase density is between 790 kg/m³ to 860 kg/m³ inclusive.

2. The method according to claim 1, wherein the amorphous phase density is between 790 kg/m³ to 860 kg/m³ inclusive, preferably between 790 kg/m³ to 850 kg/m³ inclusive, more preferably between 790 kg/m³ to 840 kg/m³ inclusive, most preferably between 790 kg/m³ to 820 kg/m³ inclusive.

3. The method according to any one of claims 1 to 2, wherein the polymerization parameters are determined using the Sanchez-Lacombe equation of state in accordance with the description.

4. The method of any of claims 1 to 3, wherein the polymerization parameters are chosen from the group consisting of a polymerization temperature, a polymerization pressure, an alpha-olefin monomer concentration, molar ratios of one or several alpha-olefin co-monomers to alpha-olefin monomer, a molar ratio of a chain transfer agent to alpha-olefin monomer, an inert diluent concentration, an inert diluent composition and combinations thereof, preferably an inert diluent concentration or composition.

5. The method according to claim 4, wherein the alpha-olefin monomers are ethylene monomers, the comonomers are C₃-C₁₀ alpha-olefin comonomers and/or combinations thereof.

6. The method according to any one of claims 1 to 5, wherein the operating polymerization parameters for providing an amorphous phase density between 790 kg/m³ to 860 kg/m³ inclusive are at least one of
the polymerization temperature in the range of from 40 to 120°C, preferably in the range of from 60 to 100°C, more preferably in the range of from 65 to 85 °C;
the pressure in the range of from 3 to 30 barg, preferably in the range of from 15 to 25 barg, more preferably in the range of 16 to 22 barg;
the alpha-olefin monomer concentration in the range of from 1 to 50 mol%, preferably in the range of from 10 to 40 mol%, more preferably in the range of from 20 to 30 mol%;
the molar ratio of the alpha olefin comonomer to alpha-olefin monomer in the range of from 0 to 1200 mol/kmol, preferably 1 to 900 mol/kmol;
the molar ratio of the chain transfer agent to alpha-olefin monomer in the range of from 0 to 200 mol/kmol, preferably 0.1 to 200 mol/kmol;
the inert diluent is a mixture of nitrogen and an alkane wherein preferably the alkane is propane, wherein
the nitrogen concentration is in the range of 0 to 70 mol%, preferably in the range of from 0 to 60 mol%, more preferably in the range of from 0 to 50 mol%;
the alkane concentration, preferably the propane concentration, is in the range of 10 to 70 mol %, preferably in the range of 15 to 70 mol%, more preferably in the range of 20 to 70 mol%
wherein the mol% are based on the total mol% of gas phase composition.

7. The method according to any of claims 1 to 6, wherein the alpha-olefin polymer has a density of at least 890 kg/m³.

8. The method of any of claims 1 to 7 wherein the alpha-olefin polymer is an ethylene based polymer or an ethylene based copolymer wherein preferably the ethylene copolymer is an ethylene/C₃-C₁₀ alpha olefin copolymer or terpolymer or combinations thereof.

9. The method of any of claims 1 to 8, wherein the method comprises:
i) setting a target for the density of the alpha-olefin polymer and simulating a first set of one or more polymerization parameters yielding said target density of the alpha-olefin polymer;
ii) setting a target amorphous density value for the amorphous phase of the growing polymer particles between 790 and 860 kg/m³ inclusive;
iii) determining a second set of one or more polymerization parameters using the Sanchez-Lacombe equation of state in accordance with the description by using as input said target amorphous density value and the first set of simulated polymerization parameters
iv) adjusting/setting the operating conditions of the gas phase reactor to utilize polymerization parameters based on to those determined in step iii.

10. The method according to any of claims 1 to 9, wherein the method is a continuous method.

11. A continuous method for polymerizing at least two alpha-olefin polymers having different densities in a single gas phase reactor containing a reaction zone comprising growing alpha-olefin polymer particles, the method comprising the steps of:
a) in the gas phase reactor carrying out the method of any of claims 1 to 11 for producing a first alpha-olefin polymer having a first density;
b) optionally extracting the first alpha-olefin polymer from said gas phase reactor; and
c) in the gas phase reactor carrying out the method of any of claims 1 to 11 to produce a second alpha-olefin polymer having a second density different from the first density.

12. A multi-stage polymerization process for polymerizing alpha-olefin polymers comprising the method according to any of claims 1 to 11, wherein the multi-stage polymerization process preferably further comprises a pre-polymerization and a loop polymerization, wherein the pre-polymerization step and a loop polymerization are preferably carried out before the method according to any of claims 1 to 11.

13. A method for controlling or preventing the formation of agglomerates of growing alpha-olefin polymer particles in a gas phase reactor during polymerization of an alpha-olefin polymer, the gas phase reactor comprising a reaction zone comprising growing alpha-olefin polymer particles, wherein said growing particles comprise an amorphous phase having an amorphous phase density, the method comprising operating the gas phase reactor with a set of polymerization parameters such that the amorphous phase density is between 790 kg/m³ to 860 kg/m³ inclusive.
